# EUROPÄISCHE PATENTSCHRIFT

(11) **EP 3 712 397 B1**
(45) Veröffentlichungstag und Bekanntmachung des Hinweises auf die Patenterteilung: **27.10.2021**
(21) Anmeldenummer: 20162566.2
(22) Anmeldetag: 12.03.2020
(51) Int. Cl.: F01N 3/027, F01N 3/20

(54) **ABGASHEIZELEMENT**
EXHAUST GAS HEATING ELEMENT
ÉLÉMENT CHAUFFANT DE GAZ D'ÉCHAPPEMENT

(30) Priorität: 22.03.2019 DE 102019107384
(43) Veröffentlichungstag der Anmeldung: 23.09.2020
(73) Patentinhaber: Purem GmbH, 66539 Neunkirchen (DE)
(72) Erfinder: Gaiser, Gerd, 72768 Reutlingen (DE)
(74) Vertreter: Ruttensperger Lachnit Trossin Gomoll

(56) Entgegenhaltungen:
- WO-A1-2017/151975
- US-A1- 2018 119 591
- US-A1- 2018 291 786

## Beschreibung

Die vorliegende Erfindung betrifft ein Abgasheizelement für eine Abgasanlage einer Brennkraftmaschine.

Die immer strenger werdenden Anforderungen hinsichtlich des Schadstoffausstoßes von Brennkraftmaschinen erfordern spezielle Maßnahmen, welche dafür sorgen, dass auch in der Startphase einer Brennkraftmaschine bei kalten Komponenten einer Abgasanlage der Schadstoffausstoß gesenkt werden kann. In einer derartigen Startphase sind insbesondere die in einer Abgasanlage angeordneten Katalysatoreinheiten, wie zum Beispiel ein Dreiwegekatalysator, ein Oxidationskatalysator oder ein SCR-Katalysator, bei einer Temperatur, die im Allgemeinen nicht zum Auslösen der darin jeweils durchzuführenden katalytischen Reaktion ausreicht. Um diesem Problem entgegenzutreten, kann zum Erhöhen der Abgastemperatur und somit zum Erreichen einer schnelleren Erwärmung derartiger Katalysatoren bzw. auch Partikelfilter beispielsweise bei Diesel-Brennkraftmaschinen die Kraftstoffeinspritzung zu einem späten Zeitpunkt erfolgen bzw. bei Otto-Brennkraftmaschinen der Zündwinkel auf spät gestellt werden, was jedoch wesentliche Eingriffe in das Motormanagement erforderlich macht.

Eine Abgasheizeinheit gemäß dem Oberbegriff des Anspruchs 1 ist aus der WO 2017/151975 A1 bekannt. Bei dieser bekannten Abgaseinheit weist ein mit einer Mehrzahl von in Biegungsbereichen ineinander übergehenden Wärmeübertragungselementabschnitten ausgebildetes, mäanderartig verlaufendes Wärmeübertragungselement in jedem der Wärmeübertragungselementabschnitte zwei Durchgangsöffnungen auf, durch welche geradlinig sich erstreckende Mantelheizleiterelemente sich hindurch erstrecken.

Die US 2018/0119591 A1 offenbart eine Abgasheizeinheit, bei welcher ein mäanderartig verlaufendes und in eine spiralartige Konfiguration gekrümmtes Wärmeübertragungselement mit einer Vielzahl von in Biegungsbereichen ineinander übergehenden Wärmeübertragungselementabschnitten ausgebildet ist. In den Biegungsbereichen sind Aussparungen gebildet, in welche ein gleichermaßen in eine spiralartige Konfiguration gekrümmtes Mantelheizleiterelement bereichsweise eingreifend positioniert ist.

Es ist die Aufgabe der vorliegenden Erfindung, eine Abgasheizeinheit für eine Abgasanlage einer Brennkraftmaschine vorzusehen, welche eine effiziente Erwärmung von Systembereichen der Abgasanlage insbesondere in einer Startphase einer Brennkraftmaschine ermöglicht.

Erfindungsgemäß wird diese Aufgabe gelöst durch eine Abgasheizeinheit für eine Abgasanlage einer Brennkraftmaschine gemäß Anspruch 1, umfassend:
- wenigstens ein Mantelheizleiterelement mit einem Mantel und einem in dem Mantel verlaufenden, von Isoliermaterial umgebenen elektrischen Heizleiter,
- eine an einer Außenseite des Mantels des wenigstens einen Mantelheizleiterelements angeordnete und mit diesem in Wärmeübertragungskontakt stehende Wärmeübertragungsflächenformation,
wobei die Wärmeübertragungsflächenformation wenigstens ein entlang des Mantelheizleiterelements mäanderartig verlaufendes Wärmeübertragungselement mit einer Mehrzahl von in Biegungsbereichen ineinander übergehenden und in einer Längsrichtung des Mantelheizleiterelements aufeinanderfolgend angeordneten Wärmeübertragungselementabschnitten umfasst, wobei in jedem Wärmeübertragungselementabschnitt in Zuordnung zu dem Mantelheizleiterelement eine von dem wenigstens einen Mantelheizleiterelement durchsetzte Durchgangsöffnung ausgebildet ist.

Für eine stabile Halterung des Wärmeübertragungselements am Mantelheizleiterelement und einen guten Wärmeübertrag zwischen diesen ist an wenigstens einem, vorzugsweise jedem Wärmeübertragungselementabschnitt ein die darin ausgebildete Durchgangsöffnung umgebender, von dem Wärmeübertragungselementabschnitt hervorstehender und am Mantelheizleiterelement anliegender Kragen vorgesehen.

Die Zusammenwirkung des Mantelheizleiterelements mit dem dieses aufnehmenden Wärmeübertragungselement mit mäanderartiger, also im Wesentlichen zickzackartiger oder ziehharmonikaartiger Struktur führt zu einem Abgasheizelement mit einer sehr großen Oberfläche, die zur Erwärmung von dieses umströmendem Abgas zur Verfügung steht und somit eine effiziente Erwärmung auf vergleichsweise kleinem Raum bzw. bei vergleichsweise kurzer Durchströmlänge gewährleistet.

Der Mantel des Mantelheizleiterelements kann mit Metallmaterial aufgebaut sein. Ferner kann zum Erhalt einer stabilen Abgasheizeinheit die Wärmeübertragungsflächenformation mit dem Mantel reibschlüssig, vorzugsweise durch Aufpressen oder Aufschrumpfen, oder/und materialschlüssig, vorzugsweise durch Schweißen oder Löten, verbunden sein.

Abhängig von dem in einer Abgasanlage zur Verfügung stehenden Bauraum kann, das Mantelheizleiterelement wenigstens bereichsweise sich geradlinig erstreckend ausgebildet sein oder/und kann das wenigstens eine Mantelheizleiterelement wenigstens bereichsweise sich schraubenwindungsartig oder/und spiralartig erstreckend ausgebildet sein oder/und kann das Mantelheizleiterelement wenigstens bereichsweise sich mäanderartig erstreckend ausgebildet sein.

Für eine gleichmäßige Anströmcharakteristik der an der Abgasheizeinheit bzw. dem Wärmeübertragungselement gebildeten Wärmeübertragungsflächen wird vorgeschlagen, dass wenigstens ein Teil der, vorzugsweise alle Wärmeübertragungselementabschnitte zueinander im Wesentlichen parallel angeordnet sind oder/und zur Längsrichtung des Mantelheizleiterelements im Wesentlichen orthogonal angeordnet sind.

Insbesondere dann, wenn eine Struktur mit gewundenem, also nicht geradlinig sich erstreckendem Mantelheizleiterelement vorgesehen sein soll, wird vorgeschlagen, dass wenigstens ein Teil der, vorzugsweise alle Wärmeübertragungselementabschnitte zur Längsrichtung des Mantelheizleiterelements unter einem von 90° verschiedenen Winkel angewinkelt ist.

Eine derartige Struktur kann beispielsweise dadurch erreicht werden, dass wenigstens zwei, vorzugsweise alle in der Längsrichtung des Mantelheizleiterelements einander unmittelbar benachbarten Wärmeübertragungselementabschnitte zueinander im Wesentlichen V-förmig angeordnet sind, oder/und dass wenigstens ein, vorzugsweise jeder Wärmeübertragungselementabschnitt zu dem in der Längsrichtung des Mantelheizleiterelements übernächsten Wärmeübertragungselementabschnitt im Wesentlichen parallel angeordnet ist.

Bei einer alternativen Ausgestaltungsart kann vorgesehen sein, dass wenigstens ein, vorzugsweise jeder Wärmeübertragungselementabschnitt zu einem an einer ersten Seite desselben in der Längsrichtung des Mantelheizleiterelements unmittelbar benachbarten Wärmeübertragungselementabschnitt im Wesentlichen parallel angeordnet ist und mit einem an einer der ersten Seite entgegengesetzten zweiten Seite desselben in der Längsrichtung des Mantelheizleiterelements unmittelbar benachbarten Wärmeübertragungselementabschnitt im Wesentlichen V-förmig angeordnet ist.

Für einen kompakten Aufbau und bei guter Umströmbarkeit des Wärmeübertragungselements wird vorgeschlagen, dass wenigstens ein Teil der, vorzugsweise alle Wärmeübertragungselementabschnitte zwischen den diese begrenzenden Biegungsbereichen die gleiche Erstreckungslänge aufweisen, oder/und das wenigstens ein Teil der, vorzugsweise alle Wärmeübertragungselementabschnitte im Wesentlichen ungekrümmt sind

Bei einer besonders vorteilhaften Weiterbildung der erfindungsgemäßen Abgasheizeinheit kann eine Wärmeübertragungsfläche der Wärmeübertragungsflächenformation wenigstens bereichsweise mit katalytisch wirksamem Material bereitgestellt sein. Somit wird die Abgasheizeinheit nicht nur zur Erwärmung genutzt, sondern auch, um die darin bereitgestellte Wärme direkt zur Durchführung einer katalytischen Reaktion zu nutzen.

Für eine stabile Anbindung einer derartigen Beschichtung an ein Wärmeübertragungselement ist es vorteilhaft, wenn das wenigstens eine Wärmeübertragungselement mit Aluminiummaterial, vorzugsweise einer Aluminiumlegierung, wie z.B. FeCrAlloy 1.4767, ausgebildet ist.

Insbesondere dann, wenn die Abgasheizeinheit als Dreiwegekatalysator oder als Diesel-Oxidationskatalysator wirksam sein soll, kann das katalytisch wirksame Material umfassen:
- Platin, oder/und
- Palladium, oder/und
- Rhodium.

Soll die Abgasheizeinheit als SCR-Katalysator wirksam sein, kann das katalytisch wirksame Material umfassen:
- Eisen-Zeolith-Material, oder/und
- Kupfer-Zeolith-Material, oder/und
- Vanadium-Oxid-Material.

Die Erfindung betrifft ferner ein Verfahren zur Herstellung einer erfindungsgemäßen Abgasheizeinheit, umfassend die Maßnahmen:
a) Bereitstellen eines bandartigen Rohlings für das Wärmeübertragungselement,
b) alternierendes Biegen des bandartigen Rohlings in zueinander entgegengesetzten Biegerichtungen zum Bereitstellen der Biegungsbereiche mit Abstand zueinander in einer Längsrichtung des bandartigen Rohlings und zum Bereitstellen der zwischen den Biegungsbereichen sich erstreckenden Wärmeübertragungselementabschnitte,
c) vor, nach oder bei der Maßnahme b), Einbringen einer Mehrzahl von in einer Längsrichtung des bandartigen Rohlings aufeinander folgenden Durchgangsöffnungen,
d) nach der Maßnahme c), Einführen des wenigstens einen Mantelheizleiterelements in die zueinander ausgerichtet angeordneten Durchgangsöffnungen.

Mit einem derartigen Verfahren kann in besonders einfacher Weise aus einem im Allgemeinen aus Metallmaterial bzw. Blechmaterial aufgebauten bandartigen Rohling, der zu einer Spule aufgewickelt sein kann, ein Wärmeübertragungselement bereitgestellt werden, welches mit seiner mäanderartigen, also zickzackartigen oder ziehharmonikaartigen Struktur ein Mantelheizleiterelement umgebend bzw. dieses aufnehmend angeordnet werden kann.

Für eine weitere Vereinfachung eines derartigen Herstellungsverfahrens wird bei der Maßnahme c) in Zuordnung zu wenigstens einer, vorzugsweise jeder Durchgangsöffnung der diese umgebende Kragen gebildet.

Um dafür zu sorgen, dass in der mäanderartigen Struktur alle Krägen in der gleichen Richtung orientiert sind, wird weiter vorgeschlagen, dass bei der Maßnahme c) bei in der Längsrichtung des bandartigen Rohlings unmittelbar aufeinanderfolgenden Durchgangsöffnungen die Krägen an einander entgegengesetzten Seiten des bandartigen Rohlings hervorstehend gebildet werden.

Um in einfacher Weise die Verbindung zwischen dem Wärmeübertragungselement und dem Mantelheizleiterelement bereitstellen zu können, wird vorgeschlagen, dass vor oder bei der Maßnahme d) die Wärmeübertragungselementabschnitte einander überdeckend mit einem gegenseitigen Mantelheizleiterelement-Einführabstand zueinander gehalten werden, so dass die darin ausgebildeten Durchgangsöffnungen zueinander ausgerichtet sind, dann das Mantelheizleiterelement durch die Durchgangsöffnungen hindurchgeführt wird und daraufhin die Wärmeübertragungselementabschnitte freigegeben werden und zueinander einen gegenseitigen Abstand einnehmen, der größer ist, als der Mantelheizleiterelement-Einführabstand.

Die vorliegende Erfindung betrifft ferner eine Abgasanlage für eine Brennkraftmaschine, umfassend wenigstens ein in einem Abgasströmungskanal angeordnetes, erfindungsgemäß aufgebautes Abgasheizelement, das vorzugsweise mit einem erfindungsgemäßen Verfahren hergestellt sein kann.

Um die in der Abgasheizeinheit bereitgestellte und auf das Abgas übertragene Wärme in der Abgasanlage effizient nutzen zu können, ist vorzugsweise das Abgasheizelement in einer Abgasströmungsrichtung im Abgasströmungskanal stromaufwärts bezüglich einer Abgasbehandlungseinheit, insbesondere Katalysatoreinheit oder Partikelfiltereinheit, angeordnet.

Insbesondere dann, wenn die Abgasheizeinheit selbst katalytisch wirksam ausgebildet ist, ist es vorteilhaft, wenn das katalytisch wirksame Material und die Katalysatoreinheit dem gleichen Katalysatortyp zugeordnet sind. Dies bedeutet, dass, was dann, wenn beispielsweise die Abgasheizeinheit als Dreiwegekatalysator wirksam sein soll und aus diesem Grunde mit entsprechendem katalytisch wirksamem Material beschichtet oder ausgebildet ist, auch die stromab davon angeordnete Katalysatoreinheit vom Typ des Dreiwegekatalysators ist. Somit kann beispielsweise in einer Startphase die durch das Mantelheizleiterelement sehr schnell erwärmte Abgasheizeinheit als Katalysator wirksam sein, auch wenn der stromab dann folgende Dreiwegekatalysator aufgrund zu geringer Temperatur noch nicht katalytisch wirksam ist.

Für eine noch schnellere Erwärmung der Abgasanlage wird vorgeschlagen, dass wenigstens einer Abgasheizeinheit eine Kohlenwasserstoff-Abgabeanordnung zum Abgeben von Kohlenwasserstoff in den Abgasstrom stromaufwärts bezüglich der Abgasheizeinheit zugeordnet ist. Der an der heißen Oberfläche der Abgasheizeinheit reagierende Kohlenwasserstoff, also beispielsweise Benzin oder Diesel, setzt bei seiner Reaktion eine erhebliche Wärmemenge frei, die in der Umgebung der Abgasheizeinheit das dort strömende Abgas erwärmt und somit eine effiziente Erwärmung von weiter stromabwärts liegenden Systembereichen unterstützt.

Die vorliegende Erfindung wird nachfolgend mit Bezug auf die beiliegenden Figuren detailliert beschrieben. Es zeigt:
- Fig. 1: einen Abschnitt einer bekannten ein hochtemperaturfähiges Mantelheizleiterelement umfassenden Abgasheizeinheit in perspektivischer Ansicht;
- Fig. 2: die Abgasheizeinheit der Fig. 1 in einer Abgasanlage betrachtet in Abgasströmungsrichtung;
- Fig. 3: eine der Fig. 2 entsprechende Darstellung in perspektivischer Ansicht;
- Fig. 4: eine Seitenansicht einer Abgasheizeinheit;
- Fig. 5: eine weitere Seitenansicht einer Abgasheizeinheit;
- Fig. 6: eine weitere Seitenansicht einer Abgasheizeinheit;
- Fig. 7: Darstellung eines Wärmeübertragungselements gemäß der Erfindung;
- Fig. 8: das Wärmeübertragungselement der Fig.7 bei Anbringung an einem Mantelheizleiterelement;
- Fig. 9: das an einem Mantelheizleiterelement angebrachte Wärmeübertragungselement der Fig. 7;
- Fig. 10: eine prinzipielle Darstellung einer Vorrichtung zur Herstellung eines Wärmeübertragungselements;
- Fig. 11: eine prinzipielle Darstellung einer alternativen Ausgestaltungsart einer Vorrichtung zur Herstellung eines Wärmeübertragungselements;
- Fig. 12: eine Phase der Herstellung eines Wärmeübertragungselements;
- Fig. 13: eine weitere Phase der Herstellung eines Wärmeübertragungselements;
- Fig. 14: eine weitere Phase der Herstellung eines Wärmeübertragungselements;
- Fig. 15: das an einem Mantelheizleiterelement angeordnete Wärmeübertragungselement;
- Fig. 16: eine Abgasanlage mit einer in einem Abgasrohr stromaufwärts bezüglich einer Katalysatoreinheit angeordneten Abgasheizeinheit;
- Fig. 17: eine weitere Ausgestaltungsart einer Abgasanlage mit einer in einem Abgasrohr stromaufwärts bezüglich einer Katalysatoreinheit angeordneten Abgasheizeinheit;
- Fig. 18: eine Abgasheizeinheit mit dieser zugeordneter Kohlenwasserstoff-Abgabeanordnung.

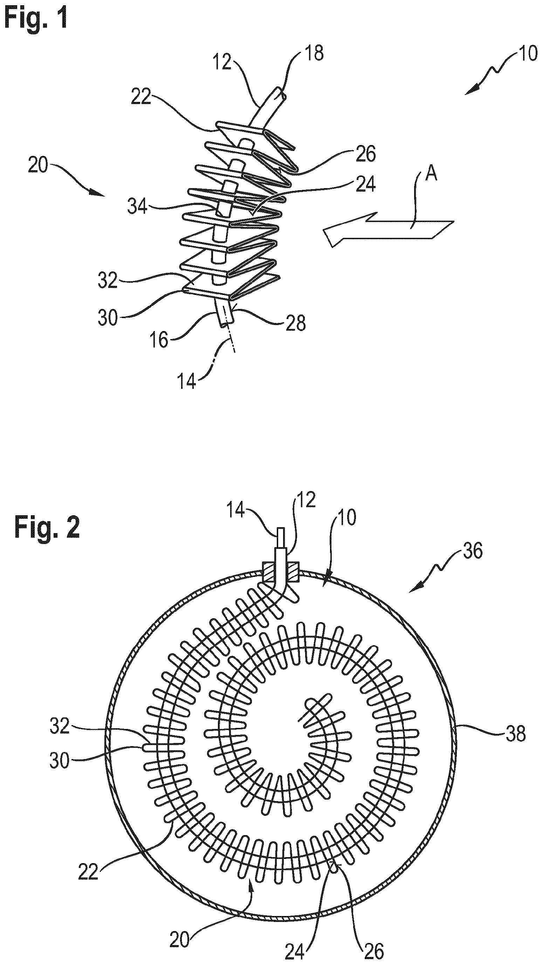

Die Fig. 1 zeigt eine Abgasheizeinheit 10 für eine Abgasanlage einer Brennkraftmaschine. Die Abgasheizeinheit 10 umfasst ein insbesondere hochtemperaturfähiges Mantelheizleiterelement 12 mit einem in einem Kernbereich desselben angeordneten Heizleiter 14. Der Heizleiter 14 kann einen oder mehrere Heizdrähte umfassen und ist in einem von einem Mantel 16 umgebenen Innenraum durch ein Isoliermaterial 18, beispielsweise Keramikmaterial, umgeben.

An einer Außenoberfläche 28 des mit Metallmaterial, beispielsweise Stahlmaterial, aufgebauten Mantels 16 ist eine Wärmeübertragungsflächenformation 20 angeordnet. Im dargestellten Beispiel umfasst die Wärmeübertragungsflächenformation 20 ein mäanderartig entlang des Mantelheizleiterelements 12 verlaufendes und an dessen Außenoberfläche 28 angebundenes Wärmeübertragungselement 22. An beiden im Wesentlichen in der Längserstreckungsrichtung des Mantelheizleiterelements 12 orientierten Seiten stellt das Wärmeübertragungselement 22 Wärmeübertragungsflächen 24, 26 bereit, welche von in einer Abgasströmungsrichtung A auf die Abgasheizeinheit 10 zu strömendem Abgas umströmbar sind und an welchen die vom Mantel 16 aufgenommene Wärme auf das Abgas übertragen werden kann. Selbstverständlich findet auch im Bereich der Außenoberfläche 28 des Mantels 16 ein Wärmeübertrag auf das diesen umströmende Abgas statt.

Das Wärmeübertragungselement 22 ist, wie nachfolgend detailliert beschrieben, beispielsweise aus einem bandartigen Rohling aus Metallmaterial aufgebaut und in eine mäanderartige, also zickzackartige oder ziehharmonikaartige Struktur gebogen. Zwischen aufeinanderfolgenden Biegungsbereichen 30 erstrecken sich vorzugsweise im Wesentlichen ungekrümmte Wärmeübertragungselementabschnitte 32. Die zwischen jeweils zwei Biegungsbereichen 30 verlaufenden Wärmeübertragungselementabschnitte 32 weisen zwischen den diese beendenden Biegungsbereichen 30 vorzugsweise gleiche Erstreckungslängen auf. Die Wärmeübertragungselementabschnitte 32 können näherungsweise parallel oder unter einem Winkel zueinander aufeinanderfolgend angeordnet sein und weisen in Zuordnung zu dem Mantelheizleiterelement 12 eine jeweilige Durchgangsöffnung 34 auf, durch welche das Mantelheizleiterelement 12 sich hindurcherstreckt und in deren Bereich eine Verbindung zwischen dem Mantelheizleiterelement 12 und dem Wärmeübertragungselement 22 bzw. den Wärmeübertragungselementabschnitten 32 desselben hergestellt ist. Diese Verbindung kann beispielsweise materialschlüssig, also zum Beispiel durch Löten oder Schweißen, realisiert sein, oder kann durch Klemmung oder Presspassung oder Aufschrumpfen bereitgestellt sein. Das Aufschrumpfen kann beispielsweise dadurch realisiert werden, dass das Wärmeübertragungselement 22 vor dem Einführen des Mantelheizleiterelements 12 in die Durchgangsöffnungen 34 erwärmt und danach abgekühlt wird. Alternativ kann das Wärmeübertragungselement mit Formgedächtnismaterial hergestellt werden, welches sich nach dem Bilden der Durchgangsöffnungen 34 und bei Erwärmung zusammenzieht, so dass nach dem Einführen des Mantelheizleiterelements 12 in die Durchgangsöffnungen 34 und insbesondere bei Erwärmung durch die Abgasheizeinheit 10 umströmendes Abgas das Wärmeübertragungselement 22 auch im Bereich der Durchgangsöffnungen 34 sich zusammenzieht und somit eine feste Anbindung an das Mantelheizleiterelement 12 erfährt.

Die Fig. 2 zeigt die Anordnung der Abgasheizeinheit 10 in einem Abgasströmungskanal einer Abgasanlage 36. Die Abgasanlage 36 weist ein rohrartiges Gehäuse 38 auf, in welchem, beispielsweise stromaufwärts bezüglich einer als Abgasbehandlungseinheit wirksamen Katalysatoreinheit, die Abgasheizeinheit 10 angeordnet ist und von dem orthogonal zur Zeichenebene der Fig. 2 orientierten Abgasstrom umströmbar ist. Die Abgasheizeinheit 10 ist in der Darstellung der Fig. 2 spiralartig gewunden, so dass im Wesentlichen der gesamte Querschnitt des rohrartigen Gehäuses 38 mit der Abgasheizeinheit 10 belegt ist. Alternativ oder zusätzlich kann die Abgasheizeinheit 10 schraubenartig gewunden sein, so dass auch eine in der Abgasströmungsrichtung langgestreckte Ausdehnung erreicht wird. Abhängig von der Querschnittsgeometrie des Gehäuses 38 kann die Abgasheizeinheit 10 auch mit mäanderartiger, also im Wesentlichen hin und her verlaufender Anordnung des Mantelheizleiterelements 12, im Inneren des Gehäuses 38 angeordnet sein.

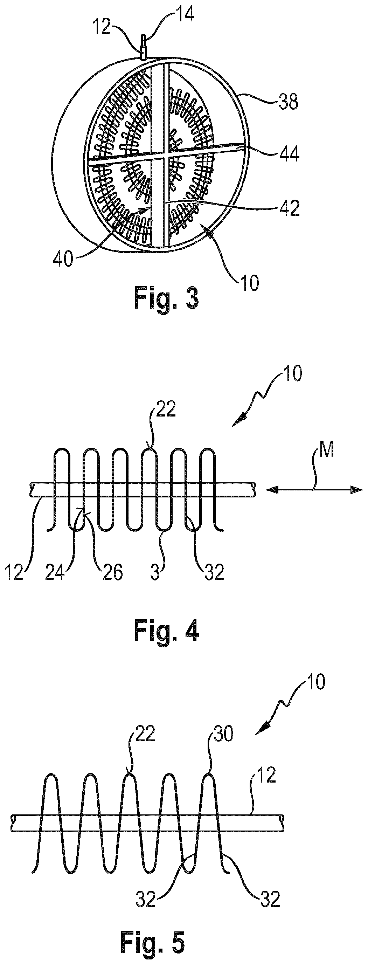

In Fig. 3 ist ein in Zuordnung zu der im Gehäuse 38 angeordneten Abgasheizeinheit 10 angeordnetes Halteelement 40 zu erkennen. Dieses weist zwei beispielsweise aus Blechmaterial aufgebaute Haltebalken 42, 44 auf, die in kreuzartiger Struktur angeordnet sind und in ihren an das Gehäuse 38 anschließenden Endbereichen umgebogen und beispielsweise durch Materialschluss an das Gehäuse 38 angebunden sind. Die Haltebalken 42, 44 weisen in der Abgasströmungsrichtung eine deutlich größere Ausdehnung auf, als quer dazu, so dass sie einerseits eine stabile Haltewirkung für die Abgasheizeinheit 10 entfalten können, andererseits aber keinen wesentlichen Strömungswiderstand für das Abgas einführen. Durch die umgebogenen Endbereiche der Haltebalken 42, 44 ist ferner die Möglichkeit gegeben, dass diese ohne das Entstehen größerer Spannungen sich bei thermischer Belastung ausdehnen bzw. zusammenziehen können. Um dies weiter zu unterstützen, können die Haltebalken 42, 44 auch eine von der dargestellten geradlinigen Erstreckung abweichende geschwungene oder gekrümmte Erstreckung aufweisen.

In den Fig. 4-6 sind verschiedene Konfigurationen des in eine mäanderartige Form gebogenen Wärmeübertragungselements 22 dargestellt. Die Fig. 4 zeigt eine Anordnung, bei welcher zwischen den aufeinander folgenden Biegungsbereichen 30 verlaufende Wärmeübertragungselementabschnitte 32 zueinander im Wesentlichen parallel angeordnet sind. Bei im Wesentlichen geradlinig in einer Längsrichtung M sich erstreckendem Mantelheizleiterelement 12 liegen somit die an beiden Seiten des Wärmeübertragungselements 32 gebildeten Wärmeübertragungsflächen 24, 26 aufeinanderfolgender Wärmeübertragungselementabschnitte 32 einander mit im Wesentlichen gleichmäßigem Abstand gegenüber, so dass eine gute Durchströmbarkeit der Abgasheizeinheit 10 gewährleistet ist.

In Fig. 5 ist ein Beispiel gezeigt, bei welcher die Wärmeübertragungselementabschnitte 32 zueinander nicht parallel angeordnet sind, sondern aufeinanderfolgende und in einem Biegungsbereich 30 aneinander anschließende Wärmeübertragungselementabschnitte 32 eine V-förmige Struktur, also eine im Wesentlichen dreiecksartige Struktur, bereitstellen. Ist, wie in Fig. 5 dargestellt, das Mantelheizleiterelement 12 dabei zunächst auch geradlinig sich erstreckend angeordnet, führt das Biegen des Mantelheizleiterelements 12 beispielsweise in die in Fig. 2 erkennbare spiralartige Struktur dazu, dass die Wärmeübertragungselementabschnitte 32 einander angenähert werden und beispielsweise wieder in eine zueinander im Wesentlichen parallele Konfiguration gebracht werden.

Die in Fig. 5 dargestellte Struktur mit V-förmig zueinander angeordneten Wärmeübertragungselementabschnitten 32 kann dadurch erreicht werden, dass zunächst das in mäanderartige Form gebogene Wärmeübertragungselement 22 zusammengedrückt wird und die in den Wärmeübertragungselementabschnitten 32 gebildeten Durchgangsöffnungen 34 zueinander ausgerichtet werden. Es wird dann das Mantelheizleiterelement 12 durch all diese Durchgangsöffnungen 34 hindurch geschoben. Daraufhin wird das Wärmeübertragungselement 22 freigegeben bzw. auseinandergezogen, so dass die Wärmeübertragungselementabschnitte 32 bezüglich des Mantelheizleiterelements 12 verkippen oder stärker verkippen und in die in Fig. 5 dargestellte Raumlage bezüglich des Mantelheizleiterelements 12 kommen, in welcher sie zu diesem nicht orthogonal sondern unter einem von 90° abweichenden Winkel angeordnet sind. Bei diesem Verkippen der Wärmeübertragungselementabschnitte 32 bezüglich des Mantelheizleiterelements 12 wird eine Klemmwirkung im Bereich der Durchgangsöffnungen 34 hervorgerufen. Dies erhöht die Verbindungsfestigkeit und verbessert auch den Wärmeübertragungskontakt

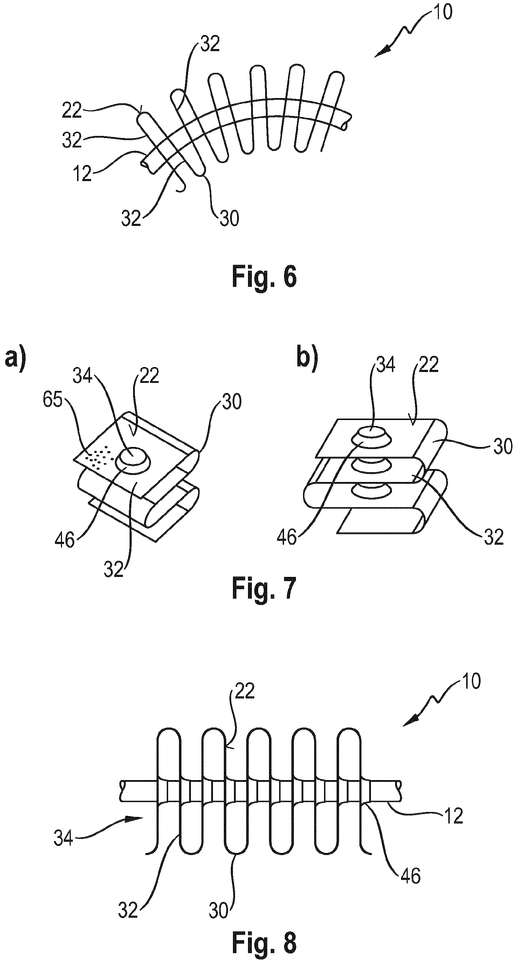

Die Fig. 6 zeigt eine Konfiguration, bei welcher die Wärmeübertragungselementabschnitte 32 alternierend zueinander parallel angeordnet sind bzw. eine V-förmige Struktur bilden. Dies bedeutet, dass jeder Wärmeübertragungselementabschnitt 32 zu einem an einer Seite desselben angeordneten, unmittelbar folgenden Wärmeübertragungselementabschnitt 32 parallel liegt und mit einem an der anderen Seite desselben angeordneten, unmittelbar folgenden Wärmeübertragungselementabschnitt 32 eine V-förmige Struktur bildet. Eine derartige unsymmetrische Ausgestaltung kann beispielsweise dann Anwendung finden, wenn, wie in Fig. 6 veranschaulicht, das Mantelheizleiterelement 12 einen gekrümmten Verlauf aufweist.

Die Fig. 7-9 zeigen eine spezielle Ausgestaltung gemäß der Erfindung eines Wärmeübertragungselements 22 hinsichtlich der darin bereitgestellten Durchgangsöffnungen 34. Man erkennt, dass in jedem Wärmeübertragungselementabschnitt 32 ein beispielsweise als Durchzug bereitgestellter und eine jeweilige Durchgangsöffnung 34 umgebender Kragen 46 gebildet ist. Bei in der mäanderartigen Struktur angeordnetem Wärmeübertragungselement 22 weisen alle Krägen 46 in die gleichen Richtung, so dass für das Einführen des Mantelheizleiterelements 12 in die Durchgangsöffnungen 34 jeder derartige Kragen 46 als Einführtrichter wirksam ist. Ferner kann durch das Bereitstellen der Krägen 46 ein verbesserter Wärmeübertragungskontakt zwischen dem Mantelheizleiterelement 12 und dem Wärmeübertragungselement 22 bereitgestellt werden. Im Bereich der Krägen 46 kann dann auch die beispielsweise materialschlüssige feste Anbindung des Wärmeübertragungselements 22 an das Mantelheizleiterelement 12 erfolgen.

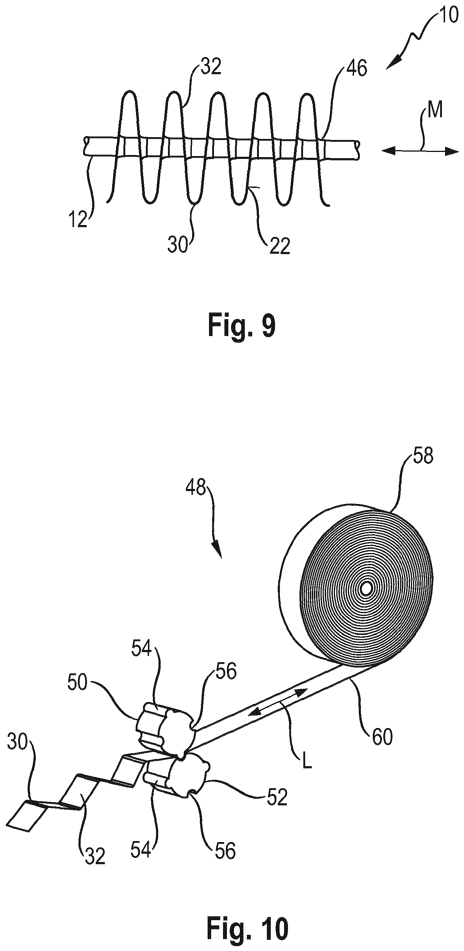

Auch bei Ausgestaltung mit derartigen Krägen 46 ist es möglich, die Wärmeübertragungselementabschnitte 32 zueinander im Wesentlichen parallel und somit zum Mantelheizleiterelement 12 im Wesentlichen orthogonal orientiert anzuordnen, wie in Fig. 8 veranschaulicht, oder, wie in Fig. 9 veranschaulicht, zueinander und auch zur Längsrichtung M des Mantelheizleiterelements 12 angewinkelt anzuordnen, um mit einander unmittelbar benachbarten Wärmeübertragungselementabschnitten 32 die V-förmige Struktur zu bilden. Auch diese kann erreicht werden, indem ein zunächst stärker komprimiert gehaltenes Wärmeübertragungselement 22 nach dem Einführen des Mantelheizleiterelements 12 in die Durchgangsöffnungen 34 losgelassen oder auseinandergezogen wird und dabei die einzelnen Wärmeübertragungselementabschnitte 32 zueinander und auch bezüglich des Mantelheizleiterelements 12 verkippen.

Mit Bezug auf die Fig. 10-15 wird nachfolgend beschrieben, wie eine derartige Abgasheizeinheit 10 bzw. das Wärmeübertragungselement 22 dafür hergestellt werden kann.

Dazu kann, wie in Fig. 10 veranschaulicht, eine Vorrichtung 48 mit um zueinander parallele Achsen gegensinnig rotierenden Formwalzen 50, 52 eingesetzt werden. Die Formwalzen 50, 52 weisen an ihrem Außenumfang abwechselnd jeweils einen in Richtung der Drehachse sich erstreckenden Biegevorsprung 54 und eine Biegeeinsenkung 56 auf. Die beiden Formenwalzen 50, 52 sind so positioniert und mit ihren Außenumfangsbereichen gegeneinander gedrückt, dass im Verlaufe der Rotation die alternierend angeordneten Biegevorsprünge 54 und Biegeeinsenkungen 56 ineinander eingreifen. Bei der Rotation der Formwalzen 50, 52 wird somit ein von einer Spule 58 abgewickelter bandartiger Rohling 60 für das Wärmeübertragungselement 22 abwechselnd in zueinander entgegengesetzte Richtungen verformt, wodurch die Biegungsbereiche 30 und die dazwischen liegenden Wärmeübertragungselementabschnitte 32 gebildet werden.

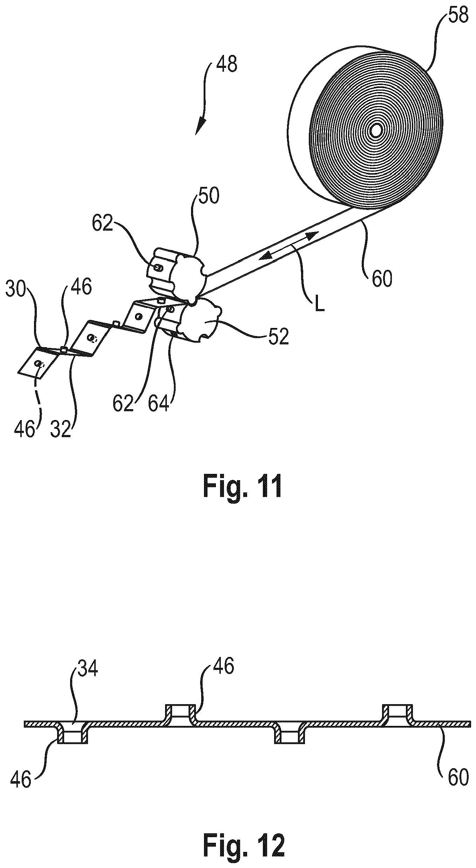

Die Fig. 12 veranschaulicht, dass beispielsweise nach dem Abwickeln von der Spule 58 und vor dem Erzeugen der Biegungsbereiche 30, also vor den beiden Formwalzen 50, 52, die Durchgangsöffnungen 34 bzw. die Krägen 46 an dem Rohling 60 erzeugt werden können. Hierzu können Formgebungswerkzeuge eingesetzt werden, welche einerseits die Durchgangsöffnungen 34 erzeugen und andererseits beispielsweise durch Prägen oder Ziehen die alternierend zu verschiedenen Seiten des Rohlings 60 hervorstehenden Krägen 46 bilden. Um ein gegenseitiges Stören der Krägen 46 mit den Formwalzen 50, 52 zu vermeiden, können diese beispielsweise zwischen in Umfangsrichtung aufeinanderfolgenden Biegevorsprüngen 54 und Biegeeinsenkungen 56 Vertiefungen aufweisen, in welche beim Bewegen zwischen den Formwalzen 50, 52 hindurch die am Rohling 60 bereits gebildeten Krägen 46 eingreifen können.

Bei einer in Fig. 11 dargestellten alternativen Ausgestaltung der Vorrichtung 48 können an den Formwalzen 50, 52 zwischen den in Umfangsrichtung aufeinanderfolgenden Biegevorsprüngen 54 und Biegeeinsenkungen 56 alternierend jeweils Kragenvorsprünge 62 und Krageneinsenkungen 64 gebildet sein, welche beim Hindurchführen des Rohlings 60 zwischen den beiden Formwalzen 50, 52 im Wesentlichen gleichzeitig mit dem Bilden der Biegungsbereiche 30 bzw. jeweils kurz vor dem Bilden eines Biegungsbereichs 30 eine Durchgangsöffnung 34 bzw. einen Kragen 46 erzeugen.

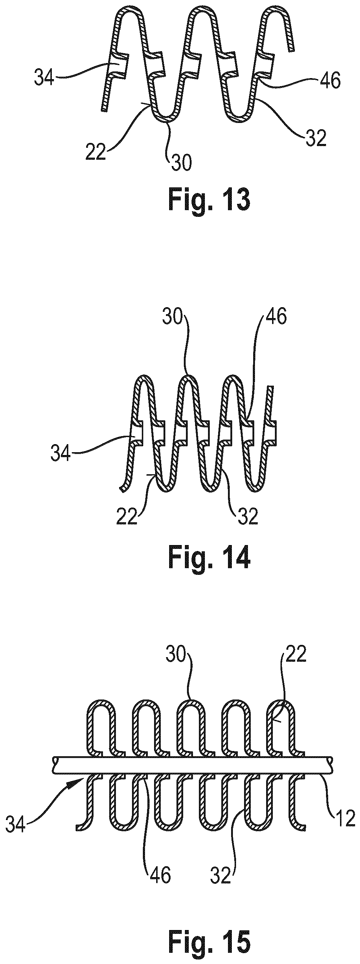

Nachdem in dem Rohling 60 die Biegungsbereiche 30 und die Krägen 46 bzw. die von diesen umgebenden Durchgangsöffnungen 34 erzeugt wurden, kann der Rohling 60 zum Bereitstellen des mit mäanderartiger Struktur aufgebauten Wärmeübertragungselements 22 weiter gefaltet werden, also in den Biegungsbereichen 30 weiter gekrümmt werden, so dass die in den Fig. 13 und 14 dargestellte Konfiguration erhalten wird. Nachfolgend kann dann das Mantelheizleiterelement 12 durch die zueinander ausgerichteten Durchgangsöffnungen 34 hindurchgeführt werden. Um beim Biegen bzw. Falten des Rohlings 60 diese Ausrichtung aller Durchgangsöffnungen 34 in einfacher Weise erhalten zu können, ist es vorteilhaft, wenn diese in der Längsrichtung L des Rohlings 60 im Wesentlichen mittig zwischen zwei Biegungsbereichen 30 gebildet werden. Nachdem, wie in Fig. 15 veranschaulicht, das Mantelheizleiterelement 12 durch die Durchgangsöffnungen 34 hindurchgeführt ist, kann die vorangehend angesprochene feste Verbindung erzeugt werden, beispielsweise indem im Bereich der Krägen 46 das Wärmeübertragungselement 22 mit dem Mantelheizleiterelement 12 verlötet wird.

In einem weiteren Arbeitsschritt kann das Wärmeübertragungselement 22 an seiner von Abgas umströmbaren Außenoberfläche wenigstens bereichsweise mit katalytisch wirksamem Material 65 beschichtet werden. Für eine stabile Anbindung von derartigem katalytisch wirksamem Material 65 ist es vorteilhaft, ein derartiges Wärmeübertragungselement 22 aus Aluminium oder einer Aluminiumlegierung mit hohem Aluminiumanteil bereitzustellen. Üblicherweise wird beim Aufbringen von derartigem katalytisch wirksamem Material 65 zunächst die metallische Oberfläche mit einer als Washcoat bezeichneten porösen, oxidkeramischen Beschichtung mit einer großen inneren Oberfläche überzogen. Auf diese Beschichtung wird dann das katalytisch wirksame Material 65 beispielsweise in einem so genannten Imprägnierungsprozess aufgebracht. Dieser Prozess des Aufbringens von katalytisch wirksamem Material 65 kann beispielsweise bei der Herstellung des Rohlings 60 erfolgen, so dass ein bereits mit katalytisch wirksamem Material beschichteter Rohling 60 dem vorangehend beschriebenen Formgebungsprozess unterzogen wird. Alternativ ist es möglich, jedes einzelne in die mäanderartige bzw. zickzackartige Struktur gebogene Wärmeübertragungselement 22 mit derartigem Material 65 zu beschichten.

Durch das Aufbringen von katalytisch wirksamem Material 65 auf ein Wärmeübertragungselement 22 wird die Möglichkeit geschaffen, bei Erregung des damit verbundenen Mantelheizleiterelements 12 das Wärmeübertragungselement 22 bzw. die katalytisch wirksame Beschichtung sehr schnell auf eine Temperatur zu bringen, bei welcher beim Umströmen mit Abgas die katalytische Reaktion erfolgen kann. Dies ermöglicht es, auch in der Startphase einer Brennkraftmaschine nahezu ohne zeitliche Verzögerung eine katalytische Wirkung in der Abgasanlage bereitzustellen und somit auch unmittelbar nach dem Anlassen einer Brennkraftmaschine den Schadstoffausstoß deutlich zu senken.

Abhängig davon, von welchem Typ die so bereitgestellte Katalysatorwirkung sein soll, wird das katalytisch wirksame Material 65 ausgewählt. Soll beispielsweise die Abgasheizeinheit 10 als Dreiwegekatalysator wirksam sein, kann das katalytisch wirksame Material 65 Platin, Palladium, Rhodium oder Mischungen davon enthalten. Auch die Temperaturbeständigkeit des katalytisch wirksamen Materials 65 verbessernde Strukturpromotoren können in dieser Beschichtung vorgesehen sein. Soll die Wirkung eines Diesel-Oxidationskatalysators erreicht werden, ist es vorteilhaft, als Hauptkomponenten des katalytisch wirksamen Materials 65 Platin und Palladium einzusetzen. Auch Mischoxide können zur Anwendung kommen. Soll die Wirkung eines SCR-Katalysators erreicht werden, ist es vorteilhaft, das katalytisch wirksame Material 65 mit Eisen-Zeolith-Material, Kupfer-Zeolith-Material oder Vanadium-Oxid-Material, wie z. B. Vanadium-Pentoxid, bereitzustellen.

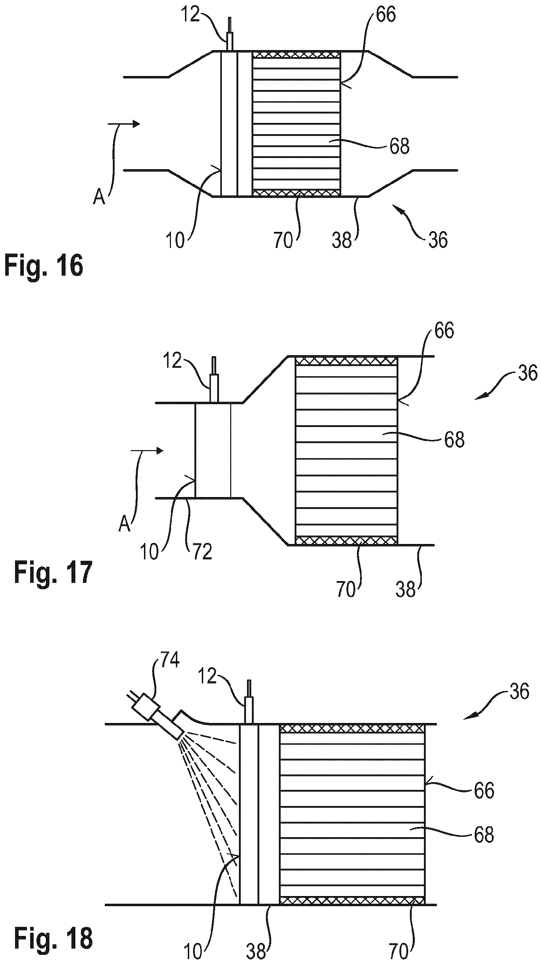

Dieser Katalysatoreffekt kann dann in besonders effizienter Weise genutzt werden, wenn, wie die Fig. 16 dies veranschaulicht, eine derartige mit katalytisch wirksamem Material 65 bereitgestellte Abgasheizeinheit 10 beispielsweise in dem Gehäuse 38 stromaufwärts bezüglich einer darin angeordneten und als Abgasbehandlungseinheit wirksamen Katalysatoreinheit 66 angeordnet ist. Es sei darauf hingewiesen, dass in üblicher Bauart die Katalysatoreinheit 66 einen beispielsweise mit katalytisch wirksamem Material aufgebauten oder überzogenen Monolithen 68 aufweisen kann, der durch eine diesen umgebende Fasermatte 70 im Gehäuse 38 gehalten sein kann.

Ist die Abgasheizeinheit 10 bzw. deren Wärmeübertragungselement 22 mit katalytisch wirksamem Material 65 überzogen, ist vorzugsweise vorgesehen, dass das an der Abgasheizeinheit 10 vorgesehene katalytisch wirksame Material 65 und die Katalysatoreinheit 66 den gleichen Typ einer katalytischen Reaktion bereitstellen. Somit kann in einer Startphase, also unmittelbar nach dem Anlassen einer Brennkraftmaschine, durch elektrische Erregung sehr schnell die Abgasheizeinheit 10 mit dem daran vorgesehenen katalytisch wirksamen Material 65 auf die zur Durchführung der katalytischen Reaktion erforderliche Temperatur gebracht werden und somit als Katalysator wirksam werden, noch bevor die Katalysatoreinheit 66 die dazu erforderliche Temperatur erreicht hat. Die Katalysatoreinheit 66 wird einerseits durch das auch in der Startphase von der Brennkraftmaschine ausgestoßene Abgas, andererseits durch das die Abgasheizeinheit 10 umströmende Abgas erwärmt und somit ebenfalls schnell auf eine ausreichend hohe Temperatur gebracht, um auch in dieser die katalytische Reaktion durchzuführen. Ist diese Temperatur erreicht, kann die Erregung des Mantelheizleiterelements 12 der Abgaseinheit 10 beendet werden. Dies kann entweder durch Bereitstellung eines Temperatursignals erkannt werden, oder es kann ein definierter Zeitraum bereitgestellt sein, über welchen hinweg in der Startphase der Brennkraftmaschine die Abgasheizeinheit 10 erregt wird.

Die Fig. 17 zeigt eine Ausgestaltung, bei welcher die Abgasheizeinheit 10 stromaufwärts bezüglich der Katalysatoreinheit 66 nicht im Gehäuse 38, sondern in einem an dessen stromaufwärtiges Ende anschließenden Abgasrohr 72 untergebracht ist. Eine derartige Anordnung kann beispielsweise dann von Vorteil sein, wenn die Abgasheizeinheit 10 eine langgestreckte Konfiguration aufweisen soll.

Die Fig. 18 zeigt eine Abgasanlage 36, bei welcher in Zuordnung zu der beispielsweise gleichermaßen mit katalytisch wirksamem Material 65 bereitgestellten Abgasheizeinheit 10 eine Kohlenwasserstoff-Abgabeanordnung 74 vorgesehen ist.

Diese kann nach Art eines Injektors Kohlenwasserstoff, also beispielsweise den auch für den Betrieb der Brennkraftmaschine eingesetzten Brennstoff, in Richtung auf die Abgaseinheit 10 zu in den Abgasstrom einspritzen. Der Kohlenwasserstoff reagiert an der heißen Oberfläche der Abgasheizeinheit 10, so dass die Umsetzung des Kohlenwasserstoffs Reaktionswärme freisetzt, die zusätzlich auf das in Richtung der stromabwärts dann folgenden Katalysatoreinheit 66 strömende Abgas übertragen werden kann. Eine derartige Ausgestaltung ist insbesondere dann von Vorteil, wenn die Katalysatoreinheit 66 als SCR-Katalysator ausgebildet ist, an welcher unter Umsetzung des durch eine nicht dargestellte Reduktionsmittel-Abgabeanordnung eingespritzten Reduktionsmittels, also beispielsweise einer Harnstoff/WasserLösung, eine selektive katalytische Reduktion durchgeführt wird. Auch kann ein als Abgasbehandlungseinheit eingesetzter Partikelfilter unabhängig vom Betrieb der Brennkraftmaschine durch die Einspritzung von Kohlenwasserstoff regeneriert werden.

Bei einer weiteren Ausgestaltungsart kann im Abgasstrom transportierter Kohlenwasserstoff auch dadurch bereitgestellt werden, dass dieser gezielt von der Brennkraftmaschine ausgestoßen wird. Hierzu kann beispielsweise durch entsprechende Einstellung des Zündwinkels bzw. durch späte Kraftstoffeinspritzung dafür gesorgt werden, dass bei der in der Brennkraftmaschine stattfindenden Verbrennung nur ein Teil des Brennstoffs zündet, während ein Teil des Brennstoffs unverbrannt ausgestoßen wird und zur Umsetzung an der Abgasheizeinheit 10 oder/und der Abgasbehandlungseinheit zur Verfügung steht.

Es ist abschließend darauf hinzuweisen, dass vorangehend in verschiedenen Konfigurationen eine Abgasbehandlungseinheit beschrieben wurde, bei welcher ein einziges Mantelheizleiterelement diesem zugeordnete Durchgangsöffnungen in den Wärmeübertragungselementabschnitten eines Wärmeübertragungselements durchsetzt. Selbstverständlich können bei einer derartigen Abgasbehandlungseinheit mehrere Mantelheizleiterelemente, beispielsweise zwei Mantelheizleiterelemente, in Verbindung mit einem einzigen Wärmeübertragungselement vorgesehen sein. Bei derartiger Ausgestaltung ist in jedem der Wärmeübertragungselementabschnitte in Zuordnung zu jedem der Mantelheizleiterelemente jeweils eine zur Aufnahme desselben vorgesehene Durchgangsöffnung ausgebildet. Auch können an einem oder mehreren Mantelheizleiterelementen in deren Längsrichtung aufeinanderfolgend mehrere voneinander getrennt aufgebaute Wärmeübertragungselemente vorgesehen sein. Bei einer weiteren alternativen Ausgestaltung kann ein Wärmeübertragungselement über seine Länge hinweg mit unterschiedlicher Positionierung einander unmittelbar benachbarter Wärmeübertragungselementabschnitte ausgebildet sein, so dass diese beispielsweise in Bereichen zueinander parallel liegen können und in anderen Bereichen miteinander V-förmige Strukturen bilden können.

## Patentansprüche

1. Abgasheizeinheit für eine Abgasanlage einer Brennkraftmaschine, umfassend:
- wenigstens ein Mantelheizleiterelement (12) mit einem Mantel (16) und einem in dem Mantel (16) verlaufenden, von Isoliermaterial (18) umgebenen elektrischen Heizleiter (14),
- eine an einer Außenseite des Mantels (16) des wenigstens einen Mantelheizleiterelements (12) angeordnete und mit diesem in Wärmeübertragungskontakt stehende Wärmeübertragungsflächenformation (20),
wobei die Wärmeübertragungsflächenformation (20) wenigstens ein entlang des Mantelheizleiterelements (12) mäanderartig verlaufendes Wärmeübertragungselement mit einer Mehrzahl von in Biegungsbereichen (30) ineinander übergehenden und in einer Längsrichtung (M) des Mantelheizleiterelements (12) aufeinanderfolgend angeordneten Wärmeübertragungselementabschnitten (32) umfasst, wobei in jedem Wärmeübertragungselementabschnitt (32) in Zuordnung zu dem Mantelheizleiterelement (12) eine von dem wenigstens einen Mantelheizleiterelement (12) durchsetzte Durchgangsöffnung (34) ausgebildet ist,
**dadurch gekennzeichnet, dass** an wenigstens einem Wärmeübertragungselementabschnitt (32) ein die darin ausgebildete Durchgangsöffnung (34) umgebender, von dem Wärmeübertragungselementabschnitt (32) hervorstehender und am Mantelheizleiterelement anliegender Kragen (46) vorgesehen ist.

2. Abgasheizeinheit nach Anspruch 1, **dadurch gekennzeichnet, dass** der Mantel (16) mit Metallmaterial aufgebaut ist, oder/und dass die Wärmeübertragungsflächenformation (20) mit dem Mantel (16) reibschlüssig, vorzugsweise durch Aufpressen oder Aufschrumpfen, oder/und materialschlüssig, vorzugsweise durch Schweißen oder Löten, verbunden ist.

3. Abgasheizeinheit nach Anspruch 1 oder 2, **dadurch gekennzeichnet, dass** das Mantelheizleiterelement (12) wenigstens bereichsweise sich geradlinig erstreckend ausgebildet ist, oder/und dass das wenigstens eine Mantelheizleiterelement (12) wenigstens bereichsweise sich schraubenwindungsartig oder/und spiralartig erstreckend ausgebildet ist, oder/und dass das Mantelheizleiterelement (12) wenigstens bereichsweise sich mäanderartig erstreckend ausgebildet ist.

4. Abgasheizeinheit nach einem der vorangehenden Ansprüche, **dadurch gekennzeichnet, dass** wenigstens ein Teil der, vorzugsweise alle Wärmeübertragungselementabschnitte (32) zueinander im Wesentlichen parallel angeordnet sind oder/und zur Längsrichtung (M) des Mantelheizleiterelements (12) im Wesentlichen orthogonal angeordnet sind.

5. Abgasheizeinheit nach einem der vorangehenden Ansprüche, **dadurch gekennzeichnet, dass** wenigstens ein Teil der, vorzugsweise alle Wärmeübertragungselementabschnitte (32) zur Längsrichtung (M) des Mantelheizleiterelements (12) unter einem von 90° verschiedenen Winkel angewinkelt ist.

6. Abgasheizeinheit nach Anspruch 5, **dadurch gekennzeichnet, dass** wenigstens zwei, vorzugsweise alle in der Längsrichtung (M) des Mantelheizleiterelements (12) einander unmittelbar benachbarten Wärmeübertragungselementabschnitte (32) zueinander im Wesentlichen V-förmig angeordnet sind, oder/und dass wenigstens ein, vorzugsweise jeder Wärmeübertragungselementabschnitt (32) zu dem in der Längsrichtung des Mantelheizleiterelements (12) übernächsten Wärmeübertragungselementabschnitt (32) im Wesentlichen parallel angeordnet ist.

7. Abgasheizeinheit nach einem der vorangehenden Ansprüche, **dadurch gekennzeichnet, dass** wenigstens ein, vorzugsweise jeder Wärmeübertragungselementabschnitt (32) zu einem an einer ersten Seite desselben in der Längsrichtung (M) des Mantelheizleiterelements (12) unmittelbar benachbarten Wärmeübertragungselementabschnitt (32) im Wesentlichen parallel angeordnet ist und mit einem an einer der ersten Seite entgegengesetzten zweiten Seite desselben in der Längsrichtung (M) des Mantelheizleiterelements (12) unmittelbar benachbarten Wärmeübertragungselementabschnitt (32) im Wesentlichen V-förmig angeordnet ist.

8. Abgasheizeinheit nach einem der vorangehenden Ansprüche, **dadurch gekennzeichnet, dass** an jedem Wärmeübertragungselementabschnitt (32) ein die darin ausgebildete Durchgangsöffnung (34) umgebender, von dem Wärmeübertragungselementabschnitt (32) hervorstehender und am Mantelheizleiterelement anliegender Kragen (46) vorgesehen ist.

9. Abgasheizeinheit nach einem der vorangehenden Ansprüche, **dadurch gekennzeichnet, dass** wenigstens ein Teil der, vorzugsweise alle Wärmeübertragungselementabschnitte (32) zwischen den diese begrenzenden Biegungsbereichen (30) die gleiche Erstreckungslänge aufweisen, oder/und das wenigstens ein Teil der, vorzugsweise alle Wärmeübertragungselementabschnitte (32) im Wesentlichen ungekrümmt sind.

10. Abgasheizeinheit nach einem der vorangehenden Ansprüche, **dadurch gekennzeichnet, dass** das Wärmeübertragungselement (22) mit Aluminiummaterial, vorzugsweise einer Aluminiumlegierung, ausgebildet ist.

11. Abgasheizeinheit nach einem der vorangehenden Ansprüche, **dadurch gekennzeichnet, dass** eine Wärmeübertragungsfläche (24, 26) der Wärmeübertragungsflächenformation (20) wenigstens bereichsweise mit katalytisch wirksamem Material (65) bereitgestellt ist.

12. Abgasheizeinheit nach Anspruch 11, **dadurch gekennzeichnet, dass** das katalytisch wirksame Material (65) umfasst:
- Platin, oder/und
- Palladium, oder/und
- Rhodium.

13. Abgasheizeinheit nach Anspruch 11, **dadurch gekennzeichnet, dass** das katalytisch wirksame Material (65) umfasst:
- Eisen-Zeolith-Material, oder/und
- Kupfer-Zeolith-Material, oder/und
- Vanadium-Oxid-Material.

14. Verfahren zur Herstellung einer Abgasheizeinheit nach einem der vorangehenden Ansprüche, umfassend die Maßnahmen:
a) Bereitstellen eines bandartigen Rohlings (60) für das Wärmeübertragungselement (22),
b) alternierendes Biegen des bandartigen Rohlings (60) in zueinander entgegengesetzten Biegerichtungen zum Bereitstellen der Biegungsbereiche (30) mit Abstand zueinander in einer Längsrichtung (L) des bandartigen Rohlings (60) und zum Bereitstellen der zwischen den Biegungsbereichen (30) sich erstreckenden Wärmeübertragungselementabschnitte (32),
c) vor, nach oder bei der Maßnahme b), Einbringen einer Mehrzahl von in einer Längsrichtung (L) des bandartigen Rohlings (60) aufeinander folgenden Durchgangsöffnungen (34), wobei in Zuordnung zu wenigstens einer Durchgangsöffnung (34) der diese umgebende Kragen (46) gebildet wird,
d) nach der Maßnahme c), Einführen des wenigstens einen Mantelheizleiterelements (12) in die zueinander ausgerichtet angeordneten Durchgangsöffnungen (34).

15. Verfahren nach Anspruch 14 und Anspruch 8, **dadurch gekennzeichnet, dass** bei der Maßnahme c) in Zuordnung zu jeder Durchgangsöffnung (34) der diese umgebende Kragen (46) gebildet wird.

16. Verfahren nach Anspruch 14 oder 15, **dadurch gekennzeichnet, dass** bei der Maßnahme c) bei in der Längsrichtung (L) des bandartigen Rohlings (60) unmittelbar aufeinander folgenden Durchgangsöffnungen (34) die Krägen (46) an einander entgegengesetzten Seiten des bandartigen Rohlings (60) hervorstehend gebildet werden.

17. Verfahren nach einem der Ansprüche 14-16, **dadurch gekennzeichnet, dass** vor oder bei der Maßnahme d) die Wärmeübertragungselementabschnitte (32) einander überdeckend mit einem gegenseitigen Mantelheizleiterelement-Einführabstand zueinander gehalten werden, so dass die darin ausgebildeten Durchgangsöffnungen (34) zueinander ausgerichtet sind, dann das Mantelheizleiterelement (12) durch die Durchgangsöffnungen (34) hindurchgeführt wird und daraufhin die Wärmeübertragungselementabschnitte (32) freigegeben werden und zueinander einen gegenseitigen Abstand einnehmen, der größer ist, als der Mantelheizleiterelement-Einführabstand.

18. Abgasanlage für eine Brennkraftmaschine, umfassend wenigstens eine in einem Abgasströmungskanal angeordnete Abgasheizeinheit (10) nach einem der Ansprüche 1-13, vorzugsweise hergestellt mit einem Verfahren gemäß einem der Ansprüche 14-17.

19. Abgasanlage nach Anspruch 18, **dadurch gekennzeichnet, dass** die Abgasheizeinheit (10) in einer Abgasströmungsrichtung (A) im Abgasströmungskanal stromaufwärts bezüglich einer Abgasbehandlungseinheit, vorzugsweise Katalysatoreinheit (66) oder Partikelfiltereinheit, angeordnet ist.

20. Abgasanlage nach Anspruch 19, sofern auf einen der Ansprüche 11-13 rückbezogen, **dadurch gekennzeichnet, dass** das katalytisch wirksame Material (65) und die Katalysatoreinheit (66) dem gleichen Katalysatortyp zugeordnet sind.

21. Abgasanlage nach einem der Ansprüche 18-20, **dadurch gekennzeichnet, dass** wenigstens einer Abgasheizeinheit (10) eine Kohlenwasserstoff-Abgabeanordnung (74) zum Abgeben von Kohlenwasserstoff in den Abgasstrom stromaufwärts bezüglich der Abgasheizeinheit (10) zugeordnet ist.

## Claims

1. Exhaust gas heating unit for an exhaust system of an internal combustion engine, comprising:
- at least one jacket heating conductor element (12) with a jacket (16) and with an electrical heating conductor (14), which extends in the jacket (16) and is enclosed by insulating material (18), and
- a heat transfer surface formation (20), which is arranged on an outer side of the jacket (16) of the at least one jacket heating conductor element (12) and is in heat transfer contact with it,
wherein the heat transfer surface formation (20) comprises at least one heat transfer element extending in a meandering manner along the jacket heating conductor element (12) with a plurality of heat transfer element sections (32), which pass over one into the other in bent areas (30) and are arranged following one another in a longitudinal direction (M) of the jacket heating conductor element (12), wherein a passage opening (34), through which the at least one jacket heating conductor element (12) passes, is formed in each heat transfer element sections (32), in association with the jacket heating conductor element (12),
**characterized in that** a collar (46), which encloses the passage opening (34) formed in the heat transfer element section (32), projects from the heat transfer element section (32) and is in contact with the jacket heating conductor element, is provided at at least one heat transfer element section (32).

2. Exhaust gas heating unit in accordance with claim 1, **characterized in that** the jacket (16) is made of metallic material, or/and that the heat transfer surface formation (20) is connected to the jacket (16) by frictional engagement, preferably by pressing on or by shrinking on, or/and by connection in substance, preferably by welding or soldering.

3. Exhaust gas heating unit in accordance with claim 1 or 2, **characterized in that** the jacket heating conductor element (12) has a configuration extending linearly in at least some areas, or/and that the at least one jacket heating conductor element (12) is configured such that it extends helically or/and spirally in at least some areas, or/and that the jacket heating conductor element (12) is configured such that it extends in a meandering manner in at least some areas.

4. Exhaust gas heating unit in accordance with one of the above claims, **characterized in that** at least some and preferably all heat transfer element sections (32) are arranged essentially parallel in relation to one another or/and they are arranged essentially at right angles in relation to the longitudinal direction (M) of the jacket heating conductor element (12).

5. Exhaust gas heating unit in accordance with one of the above claims, **characterized in that** at least some and preferably all heat transfer element sections (32) are bent at an angle different from 90º in relation to the longitudinal direction (M) of the jacket heating conductor element (12).

6. Exhaust gas heating unit in accordance with claim 5, **characterized in that** at least two and preferably all heat transfer element sections (32) directly adjacent to one another in the longitudinal direction (M) of the jacket heating conductor element (12) are arranged in an essentially V-shaped manner in relation to one another, or/and that at least one and preferably each heat transfer element section (32) is arranged essentially parallel to the heat transfer element section (32) after next in the longitudinal direction of the jacket heating conductor element (12).

7. Exhaust gas heating unit in accordance with one of the above claims, **characterized in that** at least one and preferably each heat transfer element section (32) is arranged essentially parallel to a heat transfer element section (32) directly adjacent on a first side thereof in the longitudinal direction (M) of the jacket heating conductor element (12), and is arranged in an essentially V-shaped manner with a heat transfer element section (32) located directly adjacent on a second side thereof located opposite the first side in the longitudinal direction (M) of the jacket heating conductor element (12).

8. Exhaust gas heating unit in accordance with one of the above claims, **characterized in that** a collar (46), which encloses the passage opening (34) formed in the heat transfer element section, projects from the heat transfer element section (32) and is in contact with the jacket heating conductor element, is provided at each heat transfer element section (32).

9. Exhaust gas heating unit in accordance with one of the above claims, **characterized in that** at least some and preferably all heat transfer element sections (32) between the bent areas (30) defining the same have the same length of extension, or/and at least some and preferably all heat transfer element sections (32) are essentially unbent.

10. Exhaust gas heating unit in accordance with one of the above claims, **characterized in that** the heat transfer element (22) is made with an aluminum material, preferably an aluminum alloy.

11. Exhaust gas heating element in accordance with one of the above claims, **characterized in that** a heat transfer surface (24, 26) of the heat transfer surface formation (20) is provided with catalytically active material (65) in at least some areas.

12. Exhaust gas heating unit in accordance with claim 11, **characterized in that** the catalytically active material (65) comprises:
- platinum or/and
- palladium or/and
- rhodium.

13. Exhaust gas heating unit in accordance with claim 11, **characterized in that** the catalytically active material (65) comprises:
- iron zeolite material or/and
- copper zeolite material or/and
- vanadium oxide material.

14. Process for manufacturing an exhaust gas heating unit in accordance with one of the above claims, comprising the steps of:
a) Providing a strip-like blank (60) for the heat transfer element (22),
b) alternatingly bending the strip-like blank (60) in mutually opposite bending directions to provide the bent areas (30) at spaced locations from one another in a longitudinal direction (L) of the strip-like blank (60) and to provide the heat transfer element sections (32) extending between the bent areas (30),
c) preparing a plurality of passage openings (34) following one another in a longitudinal direction (L) of the strip-like blank (60) before, after or during step b), wherein the collar (46) enclosing the passage opening (34) is formed in association with at least one passage opening (34),
d) inserting, after step c), the at least one jacket heating conductor element (12) into the passage openings (34) arranged aligned with one another.

15. Process in accordance with claim 14 and claim 8, **characterized in that** the collar (46) enclosing the passage opening (34) is formed in step c) in association with each passage opening (34).

16. Process in accordance with claim 14 or 15, **characterized in that** in step c), with passage openings (34) following one another directly in the longitudinal direction (L) of the strip-like blank (60), the collars (46) are formed in a projecting form on mutually opposite sides of the strip-like blank (60).

17. Process in accordance with one of the claims 14-16, **characterized in that** before or during step d), the heat transfer element sections (32) are held, overlapping one another, at a mutual jacket heating conductor element insertion distance in relation to one another, so that the passage openings (34) formed in them are oriented towards one another, after which the jacket heating conductor element (12) is passed through the passage openings (34), and the heat transfer element sections (32) are then released and they assume a mutual distance in relation to one another, which is greater than the jacket heating conductor element insertion distance.

18. Exhaust system for an internal combustion engine, comprising at least one exhaust gas heating unit (10) arranged in an exhaust gas flow duct in accordance with one of the claims 1-13, preferably manufactured with a process in accordance with one of the claims 14-17.

19. Exhaust system in accordance with claim 18, **characterized in that** the exhaust gas heating unit (10) is arranged in an exhaust gas flow direction (A) in the exhaust gas flow duct upstream in relation to an exhaust gas treatment unit, preferably a catalytic converter unit (66) or a particle filter unit.

20. Exhaust system in accordance with claim 19, if refereed to one of the claims 11-13, **characterized in that** the catalytically active material (65) and the catalytic converter unit (66) are associated with the same type of catalytic converter.

21. Exhaust system in accordance with one of the claims 18-20, **characterized in that** a hydrocarbon release device (74) is associated with at least one exhaust gas heating unit (10) for releasing hydrocarbon into the exhaust gas stream upstream in relation to the exhaust gas heating unit (10).

## Revendications

1. Unité de chauffage de gaz d'échappement pour un système d'échappement d'un moteur à combustion interne, comprenant :
- au moins un élément conducteur de chauffage à enveloppe (12) avec une enveloppe (16) et avec un conducteur chauffant électrique (14), qui s'étend dans l'enveloppe (16) et est entouré par un matériau isolant (18), et
- une formation de surface de transfert de chaleur (20), qui est disposée sur un côté extérieur de l'enveloppe (16) dudit au moins un élément conducteur de chauffage à enveloppe (12) et est en contact de transfert thermique avec celui-ci,
dans lequel la formation de surface de transfert de chaleur (20) comprend au moins un élément de transfert de chaleur s'étendant en forme de méandre le long de l'élément conducteur de chauffage à enveloppe (12) avec une pluralité de sections d'élément de transfert de chaleur (32), qui passent les unes dans les autres dans des zones pliées (30) et sont disposées les unes derrière les autres dans une direction longitudinale (M) de l'élément conducteur de chauffage à enveloppe (12), dans lequel une ouverture de passage (34), à travers laquelle ledit au moins un élément conducteur de chauffage à enveloppe (12) passe, est formée dans chaque section d'élément de transfert de chaleur (32), en association avec l'élément conducteur de chauffage à enveloppe (12),
**caractérisé en ce qu'**il est prévu sur au moins une section d'élément de transfert de chaleur (32) un collier (46) qui entoure l'ouverture de passage (34) formée dans la section d'élément de transfert de chaleur (32), qui fait saillie de la section d'élément de transfert de chaleur (32) et qui est en contact avec l'élément conducteur de chauffage à enveloppe.

2. Unité de chauffage de gaz d'échappement selon la revendication 1, **caractérisée en ce que** l'enveloppe (16) est faite d'un matériau métallique, ou/et que la formation de surface de transfert de chaleur (20) est reliée à l'enveloppe (16) par engagement par friction, de préférence par pression ou par retrait, ou/et par liaison en substance, de préférence par soudage ou brasage.

3. Unité de chauffage de gaz d'échappement selon la revendication 1 ou 2, **caractérisée en ce que** l'élément conducteur de chauffage à enveloppe (12) a une configuration s'étendant linéairement dans au moins certaines zones, ou/et que ledit au moins un élément conducteur de chauffage à enveloppe (12) est configuré de telle sorte qu'il s'étend de manière hélicoïdale ou/et en spirale dans au moins certaines zones, ou/et que l'élément conducteur de chauffage à enveloppe (12) est configuré de telle sorte qu'il s'étend en forme de méandres dans au moins certaines zones.

4. Unité de chauffage de gaz d'échappement selon l'une des revendications précédentes, **caractérisée en ce qu'**au moins certaines et de préférence toutes les sections d'élément de transfert de chaleur (32) sont disposées essentiellement parallèlement les unes par rapport aux autres ou/et elles sont disposées essentiellement à angle droit par rapport à la direction longitudinale (M) de l'élément conducteur de chauffage à enveloppe (12).

5. Unité de chauffage de gaz d'échappement selon l'une des revendications précédentes, **caractérisée en ce qu'**au moins certaines et de préférence toutes les sections d'élément de transfert de chaleur (32) sont pliées à un angle différent de 90º par rapport à la direction longitudinale (M) de l'élément conducteur de chauffage à enveloppe (12).

6. Unité de chauffage de gaz d'échappement selon la revendication 5, **caractérisée en ce qu'**au moins deux et de préférence toutes les sections d'élément de transfert de chaleur (32) directement adjacentes l'une à l'autre dans la direction longitudinale (M) de l'élément conducteur de chauffage à enveloppe (12) sont disposées de manière essentiellement en forme de V l'une par rapport à l'autre, ou/et **en ce qu'**au moins une et de préférence chaque section d'élément de transfert de chaleur (32) est disposée essentiellement parallèlement à la section d'élément de transfert de chaleur (32) suivante dans la direction longitudinale de l'élément conducteur de chauffage à enveloppe (12).

7. Unité de chauffage de gaz d'échappement selon l'une des revendications précédentes, **caractérisée en ce qu'**au moins une et de préférence chaque section d'élément de transfert de chaleur (32) est disposée essentiellement parallèlement à une section d'élément de transfert de chaleur (32) directement adjacente sur un premier côté de celle-ci dans la direction longitudinale (M) de l'élément conducteur de chauffage à enveloppe (12), et est disposée d'une manière essentiellement en forme de V avec une section d'élément de transfert de chaleur (32) située directement adjacente sur un deuxième côté de celle-ci situé à l'opposé du premier côté dans la direction longitudinale (M) de l'élément conducteur de chauffage à enveloppe (12).

8. Unité de chauffage de gaz d'échappement selon l'une des revendications précédentes, **caractérisée en ce qu'**il est prévu sur chaque section d'élément de transfert de chaleur (32) un collier (46) qui entoure l'ouverture de passage (34) formée dans la section d'élément de transfert de chaleur (32), qui fait saillie de la section d'élément de transfert de chaleur (32) et qui est en contact avec l'élément conducteur de chauffage à enveloppe.

9. Unité de chauffage de gaz d'échappement selon l'une des revendications précédentes, **caractérisée en ce qu'**au moins certaines et de préférence toutes les sections d'élément de transfert de chaleur (32) entre les zones pliées (30) définissant les mêmes ont la même longueur d'extension, ou/et au moins certaines et de préférence toutes les sections d'élément de transfert de chaleur (32) sont essentiellement non pliées.

10. Unité de chauffage de gaz d'échappement selon l'une des revendications précédentes, **caractérisée en ce que** l'élément de transfert de chaleur (22) est réalisé avec un matériau en aluminium, de préférence un alliage d'aluminium.

11. Elément de chauffage de gaz d'échappement selon l'une des revendications précédentes, **caractérisé en ce qu'**une surface de transfert de chaleur (24, 26) de la formation de surface de transfert de chaleur (20) est pourvue d'un matériau catalytiquement actif (65) dans au moins certaines zones.

12. Unité de chauffage de gaz d'échappement selon la revendication 11, **caractérisée en ce que** le matériau catalytiquement actif (65) comprend :
- du platine ou/et
- palladium ou/et
- rhodium.

13. Unité de chauffage des gaz d'échappement selon la revendication 11, **caractérisée en ce que** le matériau catalytiquement actif (65) comprend :
- un matériau de zéolite de fer ou/et
- un matériau de zéolithe de cuivre ou/et
- un matériau d'oxyde de vanadium.

14. Procédé de fabrication d'une unité de chauffage de gaz d'échappement selon l'une des revendications précédentes, comprenant les étapes suivantes :
a) fournir une ébauche en forme de bande (60) pour l'élément de transfert de chaleur (22),
b) plier alternativement l'ébauche en forme de bande (60) dans des directions de pliage mutuellement opposées pour fournir les zones pliées (30) espacées les unes des autres dans une direction longitudinale (L) de l'ébauche en forme de bande (60) et pour fournir les sections d'élément de transfert de chaleur (32) s'étendant entre les zones pliées (30),
c) préparer une pluralité d'ouvertures de passage (34) se suivant les unes les autres dans une direction longitudinale (L) de l'ébauche en forme de bande (60) avant, après ou pendant l'étape b), dans lequel le collier (46) enfermant l'ouverture de passage (34) est formé en association avec au moins une ouverture de passage (34),
d) insérer après l'étape c) ledit au moins un élément conducteur de chauffage à enveloppe (12) dans les ouvertures de passage (34) disposées en alignement les unes avec les autres.

15. Procédé selon la revendication 14 et la revendication 8, **caractérisé en ce que** le collier (46) entourant l'ouverture de passage (34) est formé à l'étape c) en association avec chaque ouverture de passage (34).

16. Procédé selon la revendication 14 ou 15, **caractérisé en ce que**, à l'étape c), avec des ouvertures de passage (34) se succédant directement dans la direction longitudinale (L) de l'ébauche en forme de bande (60), les colliers (46) sont formés en saillie sur des côtés mutuellement opposés de l'ébauche en forme de bande (60).

17. Procédé selon l'une des revendications 14 à 16, **caractérisé en ce qu'**avant ou pendant l'étape d), les sections d'élément de transfert de chaleur (32) sont maintenues, en se chevauchant, à une distance mutuelle d'insertion d'élément conducteur de chauffage à enveloppe, de sorte que les ouvertures de passage (34) formées dans celles-ci sont orientées l'une vers l'autre, après quoi l'élément conducteur de chauffage à enveloppe (12) est passé à travers les ouvertures de passage (34), et les sections d'élément de transfert de chaleur (32) sont ensuite libérées et elles prennent une distance mutuelle l'une par rapport à l'autre, qui est supérieure à la distance d'insertion de l'élément conducteur de chauffage à enveloppe.

18. Système d'échappement pour un moteur à combustion interne, comprenant au moins une unité de chauffage de gaz d'échappement (10) disposée dans un conduit d'écoulement de gaz d'échappement selon l'une des revendications 1-13, de préférence fabriquée avec un procédé selon l'une des revendications 14-17.

19. Système d'échappement selon la revendication 18, **caractérisé en ce que** l'unité de chauffage de gaz d'échappement (10) est disposée dans une direction d'écoulement de gaz d'échappement (A) dans le conduit d'écoulement de gaz d'échappement en amont par rapport à une unité de traitement de gaz d'échappement, de préférence une unité de convertisseur catalytique (66) ou une unité de filtre à particules.

20. Système d'échappement selon la revendication 19, se référant à l'une des revendications 11-13, **caractérisé en ce que** le matériau catalytiquement actif (65) et l'unité de convertisseur catalytique (66) sont associés au même type de convertisseur catalytique.

21. Système d'échappement selon l'une des revendications 18-20, **caractérisé en ce qu'**un dispositif de libération d'hydrocarbures (74) est associé à au moins une unité de chauffage de gaz d'échappement (10) pour libérer des hydrocarbures dans le flux de gaz d'échappement en amont par rapport à l'unité de chauffage des gaz d'échappement (10).
